# FASCICULE DE BREVET EUROPEEN

(11) **EP 0 603 063 B1**
(45) Date de publication et mention de la délivrance du brevet: **23.07.1997**
(21) Numéro de dépôt: 93403026.3
(22) Date de dépôt: 14.12.1993
(51) Int. Cl.: F16B 37/08

(54) **Perfectionnements aux pièces de fixation monobloc destinées à être fixées sur la tête crantée d'une tige**
Einstückige Befestigungsvorrichtungen zum Aufsetzen auf den gezahnten Kopf eines Bolzens
One-piece fastening devices for fastening on the serrated head of a shaft

(30) Priorité: 16.12.1992 FR 9215181
(43) Date de publication de la demande: 22.06.1994
(73) Titulaire: COMPAGNIE DE MATERIEL ET D'EQUIPEMENTS TECHNIQUES C.O.M.E.T., F-60304 Senlis Cedex (FR)
(72) Inventeur: Chrzastek, Bogdan, F-77600 Bussy Saint-Georges (FR); Le Blaye, Gérard, F-93100 Montreuil (FR)
(74) Mandataire: Rinuy, Santarelli

(56) Documents cités:
- EP-A- 0 465 288
- EP-A- 0 517 281
- FR-A- 2 623 577

## Description

L'invention est relative à une pièce de fixation monobloc destinée à être fixée sur la tête crantée d'une tige, telle qu'un goujon, faisant saillie sur une embase. Une telle pièce est notamment utilisée dans le domaine de l'automobile et comporte, par exemple, des agrafes en arceau recevant des câbles ou tuyauteries à fixer sur une tôle de carrosserie de véhicule.

On connaît déjà des pièces de ce type. Une telle pièce comprend un collier rigide destiné à entourer la base de la tige proche de l'embase, coaxialement à cette tige, et deux portions crantées en regard propres à coopérer avec les crans de la tête de la tige. Elle est enfoncée à force sur la tige et doit présenter à la fois une grande facilité de montage et une bonne résistance à la traction.

Habituellement, les portions crantées sont reliées de façon rigide au collier.

Lors de la mise en place de la pièce de fixation sur la tige, les portions crantées de la pièce sont repoussées et déformées par les crans de la tête de la tige : c'est cette déformation même desdites portions crantées qui permet l'introduction de la tige dans la pièce.

Lorsqu'un effort tendant à dégager la pièce de fixation par rapport à l'embase est exercé sur ladite pièce, les crans de la tête de la tige viennent en butée sur les portions crantées. C'est uniquement leur résistance à la déformation qui s'oppose à l'effort tendant à dégager la pièce de la tige.

Cette résistance est relativement faible.

Pour l'augmenter, il a déjà été proposé de faire porter les portions crantées de la pièce de fixation par les extrémités de pattes élastiquement flexibles s'étendant à partir du collier rigide selon des directions inclinées sur l'axe de ce collier de façon telle que le montage axial de la pièce sur la tige ait pour effet de repousser légèrement lesdites pattes en les faisant plier et qu'au contraire toute sollicitation axiale exercée sur la tige dans le sens du démontage se traduise par un serrage des pattes contre la tige par effet d'arc-boutement.

Dans les modes de réalisation connus de ces dispositifs (voir le document FR-A-2 623 577), les pattes sont flexibles sur toute leur longueur et l'expérience montre que la résistance offerte par les pièces considérées aux sollicitations de démontage axial est relativement faible, en raison du fléchissement des pattes.

Un but de l'invention est de proposer une pièce de fixation qui, par rapport aux pièces précitées, est d'une meilleure tenue mécanique.

A cet effet, l'invention propose encore une pièce de fixation monobloc destinée à être fixée sur la tête crantée d'une tige faisant saillie sur une embase, pièce comportant un collier rigide destiné à entourer le pied, de la tige, proche de l'embase, coaxialement à cette tige, et au moins une portion crantée propre à coopérer avec les crans de la tête et portée par l'extrémité d'un bras élastiquement flexible s'étendant obliquement sur l'axe du collier, à partir de ce collier, et sollicité vers cet axe, ladite pièce étant caractérisée en ce que chaque portion crantée constitue une mâchoire indéformable et en ce que chaque bras matérialise à proximité du collier un axe d'articulation fictif perpendiculaire à l'axe du collier et disposé à une distance, de cet axe, supérieure au plus petit rayon intérieur du collier.

Cette pièce est avantageusement complétée par les caractéristiques suivantes prises seules ou selon toutes leurs combinaisons techniquement possibles :
- le nombre des bras porteurs de mâchoires crantées est égal à deux ;
- chaque bras présente une zone amincie qui constitue une charnière flexible et qui matérialise son axe d'articulation fictif ;
- entre chaque bras et la mâchoire qu'il porte, il est prévu une nervure de rigidification s'étendant perpendiculairement à l'axe fictif de ce bras, entre la face de la mâchoire opposée à sa face crantée et une face du bras la prolongeant en angle droit ;
- le plan passant par l'un des axes fictifs et l'arête du cran médian de la mâchoire portée par le bras matérialisant cet axe fictif, est incliné par rapport à l'axe du collier d'un angle compris entre 30 et 60° ;
- dans le cas où la tête de la tige est à filets couchés, les portions crantées de chaque mâchoire sont des successions de dièdres dont les arêtes sont perpendiculaires à l'axe du collier et qui présentent chacune, d'une part, un pan tourné vers le collier et qui est incliné obliquement par rapport à l'axe du collier, et, d'autre part, un pan opposé qui est sensiblement perpendiculaire à cet axe ;
- chaque mâchoire est prolongée en L par un rabat de centrage s'étendant depuis l'un des deux bords de cette mâchoire à une distance, de l'axe du collier, égale au plus grand rayon de la tête crantée de la tige,
- chaque mâchoire et le bras qui la porte sont disposés à l'intérieur d'une cage rigidement solidaire du collier, cette cage portant des agrafes pour recevoir des accessoires à fixer sur l'embase.

La description qui suit d'un mode de réalisation particulier de l'invention est purement illustrative et non limitative. Elle doit être lue en regard des dessins annexés sur lesquels :
- la figure 1 est une vue de côté d'une pièce de fixation conforme à un mode de réalisation particulier de l'invention dans une position où elle est en place sur un goujon porté par une tôle ;
- la figure 2 est une vue en coupe de la même pièce selon la ligne II-II de la figure 1 ;
- la figure 3 est une vue en coupe de la même pièce selon la ligne III-III de la figure 1.

La pièce de fixation qui a été représentée sur les figures comprend un cadre 1 à l'intérieur duquel sont disposées deux portions crantées 2 en regard destinées à coopérer avec les filets 3a d'un goujon 3. Ce goujon 3 comporte un pied 3b et une tête 3c et est fixé sur une tôle 4 formant embase, par soudure de son pied 3b.

Le cadre 1 comporte une partie 5 formant collier, deux montants latéraux 6 s'étendant à partir de cette partie 5 et une traverse 7 reliant les montants 6 à leurs extrémités les plus éloignées de la partie 5. Ce cadre 1 porte par exemple classiquement plusieurs agrafes en arceau (non représentées) destinées à recevoir des accessoires à fixer sur la tôle 4.

La partie 5 formant collier entoure le pied 3b du goujon 3. Elle comprend un plateau 13 dont le contour est en croix et est défini par le contour rectangulaire d'une partie 13a principale, ainsi que par les contours de deux portions rectangulaires 13b et 13c. Les montants 6 sont des parois prolongeant perpendiculairement les petits côtés de la partie principale 13a. Ils ont même largeur que cette partie 13a.

Le plateau 13 porte sur sa face destinée à être en regard de la tôle 4 une jupe annulaire 8 par laquelle la pièce est en appui sur la tôle 4. A l'intérieur du cadre 1, le plateau 13 porte un bloc central parallélépipédique 9.

Le plateau 13 et le bloc 9, qui constituent le collier 5, sont traversés par un évidement 10 dont la forme intérieure est celle d'un tronc de cône 11 prolongé par une portion de cylindre 12. La grande base du tronc de cône 11 délimite le contour intérieur de la jupe annulaire 8. Sa petite base se situe à l'intérieur du bloc 9. La portion de cylindre 12 qui la prolonge est de même diamètre. Le tronc de cône 11 et la portion de cylindre 12 sont coaxiaux. Leur axe a été référencé par X-X sur les figures.

Les portions crantées 2 forment les faces en regard de deux mâchoires 14. Chacune de ces mâchoires 14 a une forme principalement parallélépipédique plate s'étendant parallèlement aux montants 6 avec la même largeur que ceux-ci et une hauteur très inférieure à la distance qui sépare les faces en regard du parallélépipède 9 et de la traverse 7.

Chaque mâchoire est portée par un bras 15 qui la relie à la partie formant collier 5 par l'intermédiaire d'une entretoise 17 en quart de cylindre s'étendant à partir d'une des faces du bloc 9, en regard d'un des montants 6, tangentiellement à un plan perpendiculaire à cette face, et s'écartant de cette face pour remonter vers ce montant 6 et la traverse 7. Ce bras 15 est relié à ce montant 6 par une entretoise 16, s'étendant parallèlement au plateau 13 entre ce montant 6 et la portion de matière où se rencontrent le bras 15 et l'entretoise en quart de cylindre 17.

La face du bras 15 directement en regard, d'une part, de la traverse 7 et, d'autre part, du montant 6 auquel ce bras est relié, est définie par un pan 15a incliné qui se prolonge par un pan 15b perpendiculaire à l'axe X-X. Sa face opposée a une forme qui prolonge la courbure de l'entretoise 17.

Une nervure de rigidification 18 de forme triangulaire rectangle s'étend perpendiculairement entre le pan 15b et la face de la mâchoire 14 qui est opposée à sa face crantée. Par cette nervure 18, la portion du bras 15 qui se trouve au niveau du pan 15b est reliée rigidement à la mâchoire 14 que ce bras porte.

La portion qui se trouve au niveau du pan 15a constitue la zone flexible du bras. Elle présente un amincissement qui matérialise un axe d'articulation fictif A autour duquel le bras 15 pivote par rapport à la partie formant collier 5.

Les filets 3a du goujon 3 sont du type couchés. L'écartement mutuel des mâchoires 14, leurs dimensions et celles de leurs crans sont fonctions des dimensions du goujon 3. Les crans d'une portion crantée 2 sont constitués par une succession de dièdres en zigzags qui comportent chacun un pan 2a tourné vers le plateau 5 et qui est incliné obliquement par rapport à l'axe X-X et un pan couché 2b tourné vers la traverse 7 et qui est sensiblement perpendiculaire à l'axe X-X. Les arêtes des crans sont parallèles aux axes A fictifs. Le plan P passant par un axe A fictif et l'arête du cran médian, référencé par B sur les figures, de la mâchoire 14 portée par le bras matérialisant une articulation autour de cet axe A, est incliné d'un angle α de l'ordre de 45° et plus généralement compris entre 30° et 60° par rapport à l'axe X-X.

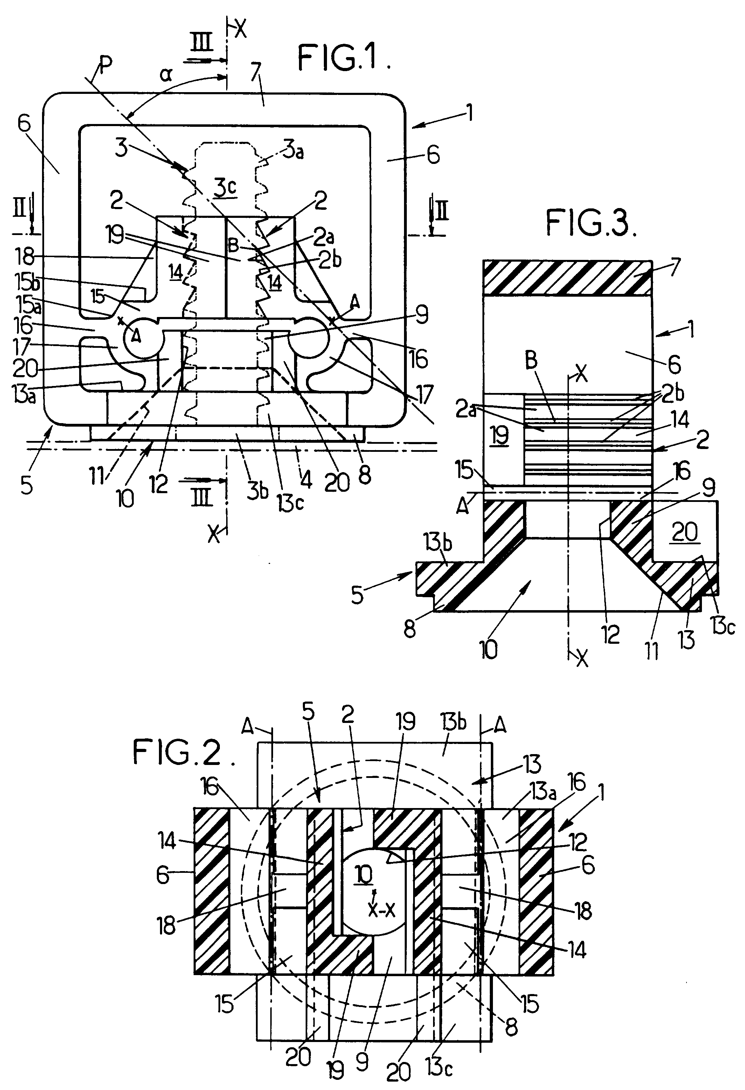

Deux crans successifs d'une même mâchoire 14 sont espacés l'un de l'autre d'un pas qui correspond au pas du filetage du goujon 3. Les deux portions crantées 2 sont disposées l'une par rapport à l'autre avec un décalage d'un demi-pas, de façon que, ainsi que cela a été représenté plus particulièrement sur la figure 1, les arêtes des filets du goujon 3 puissent être disposées au fond des crans de ces deux mâchoires 14.

Chaque mâchoire 14 est en outre prolongée par un rabat de centrage 19 s'étendant d'un des deux bords de cette mâchoire qui sont parallèles à l'axe X-X en direction de l'autre des deux mâchoires 14, perpendiculairement à un plan passant par les arêtes des crans des portions crantées. L'ensemble constitué par une mâchoire 14 et son rabat 19 a ainsi une section droite en L. La largeur d'un tel rabat 19 est sensiblement égale à la moitié de l'écartement mutuel des mâchoires 14. Les rabats 19 sont disposés de façon que leurs faces intérieures soient réparties de part et d'autre de l'axe X-X et bordent chacune un des côtés du volume occupé entre les mâchoires 14 par le goujon 3.

Les différents éléments de la pièce de fixation sont moulés de façon monobloc, notamment en un matériau thermoplastique tel qu'une résine acétal. La pièce ainsi formée présente en outre des nervures 20 du type de celles qui ont été représentées sur la portion 13b du plateau 13, destinées à faciliter l'introduction de matière lors du moulage.

La pièce de fixation s'utilise de la façon suivante. Le goujon 3 ayant été préalablement fixé sur la tôle 4, l'on présente l'évidement 10 sur la tête du goujon 3. La portion tronconique 11 de l'évidement facilite cette étape. En particulier, le chanfrein que constitue cette portion 11 autorise la mise en place de la pièce de fixation par des moyens robotisés pour laquelle une tolérance de positionnement est nécessaire.

Une fois que la tête du goujon 3 est engagée dans l'évidement 10, la pièce de fixation est enfoncée à force sur ledit goujon 3. Lors de cette étape, les arêtes des filets 3a du goujon 3 glissent contre les pans 2a inclinés des portions crantées 2, qu'ils repoussent. Le bras 15 autorisant un débattement des mâchoires 14, celles-ci sont elles-mêmes repoussées vers les montants 6 du cadre 1 de sorte qu'elles s'ouvrent et que le goujon 3 s'introduit sans grande résistance entre ces deux mâchoires 14.

Une fois la pièce en place sur le goujon 3, si un effort de traction est exercé sur celle-ci pour l'écarter de la tôle 4, les filets 3a du goujon 3 viennent en appui sur les portions crantées 2, de sorte qu'ils exercent sur les mâchoires 14 un effort relatif de réaction dirigé vers la tôle 4. Cet effort se traduit par un effet d'arc-boutement ou de coincement en sollicitant les bras 15 en flexion et en faisant pivoter les mâchoires 14 autour des axes fictifs A dans le sens correspondant à un serrage radial énergique de ces mâchoires contre le goujon 3 : c'est en effet dans ce sens que pivote alors le plan P du fait que l'axe A est plus éloigné de l'axe X-X que le point B.

L'effort de serrage en question est d'autant plus grand que l'effort de traction exercé axialement sur la pièce 1 est lui-même plus élevé.

Il est à noter à cet égard que chaque mâchoire 14, ou plus précisément chaque ensemble constitué par une telle mâchoire 14 et par la plus grande partie du bras 15 reliant cette mâchoire à l'axe fixe A correspondant, ensemble "articulé" autour dudit axe A, peut être considéré comme indéformable pour les différentes raisons suivantes : présence du voile de raidissement 18, présence des rabats 19, relative épaisseur de la mâchoire, et multiplicité des crans de mâchoire en prise avec la tête crantée de la tige 2 (le nombre de ces crans est de quatre dans le mode de réalisation illustré).

L'ancrage qui en résulte de la pièce 1 sur la tôle 4 est donc extrêmement solide, et en particulier beaucoup plus solide que celui des pièces de l'art antérieur comprenant des bras à extrémité crantée flexibles sur toute leur longueur.

L'appui des filets 3a du goujon 3 sur les crans des mâchoires 14 est plus important lorsque le goujon 3 est à filets couchés. Le serrage des mâchoires 14 sur le goujon 3 en est encore amélioré.

Comme il va de soi, l'invention ne se limite pas au mode de réalisation qui vient d'être décrit ; elle en embrasse au contraire toutes les variantes et notamment :
- celles où les crans de la tige seraient non hélicoïdaux,
- celles où la tige porterait un cran unique tel qu'un filet annulaire,
- celles où la pièce de fixation comprendrait une mâchoire crantée unique faisant face transversalement à une paroi rigide longitudinale de ladite pièce, ladite mâchoire étant destinée à appliquer transversalement la tête crantée de la tige contre ladite paroi.

## Revendications

1. Pièce de fixation monobloc destinée à être fixée sur la tête crantée (3c) d'une tige (3) faisant saillie sur une embase (4), pièce comportant un collier rigide (5) destiné à entourer le pied, de la tige, proche de l'embase, coaxialement à cette tige, et au moins une portion crantée (2) propre à coopérer avec les crans de la tête et portée par l'extrémité d'un bras élastiquement flexible (15) s'étendant obliquement sur l'axe (X) du collier, à partir de ce collier, et sollicité vers cet axe, caractérisée en ce que chaque portion crantée constitue une mâchoire indéformable (14) et en ce que chaque bras (15) matérialise à proximité du collier un axe d'articulation fictif (A) perpendiculaire à l'axe du collier et disposé à une distance, de cet axe, supérieure au plus petit rayon intérieur du collier (5).

2. Pièce selon la revendication 1, caractérisée en ce que le nombre des bras porteurs (15) de mâchoires (14) est égal à deux.

3. Pièce selon l'une quelconque des revendications 1 et 2, caractérisée en ce que chaque bras (15) présente (en 15a) une zone amincie qui constitue une charnière flexible et qui matérialise son axe (A) d'articulation fictif.

4. Pièce selon l'une quelconque des précédentes revendications, caractérisée en ce qu'elle comporte entre chaque bras (15) et la mâchoire (14) qu'il porte, une nervure de rigidification (18) s'étendant perpendiculairement à l'axe fictif (A) de ce bras, entre la face de la mâchoire opposée à sa face crantée et une face (15b) du bras la prolongeant en angle droit.

5. Pièce selon l'une quelconque des précédentes revendications, caractérisée en ce que le plan (P) passant par l'un des axes fictifs (A) et l'arête du cran médian de la mâchoire (14) portée par le bras (15) matérialisant cet axe fictif, est incliné par rapport à l'axe (X) du collier (5) d'un angle compris entre 30 et 60°.

6. Pièce selon l'une quelconque des précédentes revendications, caractérisée en ce que, dans le cas où la tête (3c) de la tige est à filets couchés (3a), les portions crantées (2) de chaque mâchoire (14) sont des successions de dièdres dont les arêtes sont perpendiculaires à l'axe (X) du collier (5) et qui présentent chacune, d'une part, un pan (2a) tourné vers le collier et qui est incliné obliquement par rapport à l'axe du collier, et, d'autre part, un pan opposé (2b) qui est sensiblement perpendiculaire à cet axe.

7. Pièce selon l'une quelconque des précédentes revendications, caractérisée en ce que chaque mâchoire (14) est prolongée en L par un rabat (19) de centrage s'étendant depuis l'un des deux bords de cette mâchoire à une distance, de l'axe (X) du collier, égale au plus grand rayon de la tête crantée (3c) de la tige.

8. Pièce selon l'une quelconque des précédentes revendications, caractérisée en ce que chaque mâchoire (14) et le bras (15) qui la porte sont disposés à l'intérieur d'une cage rigidement solidaire du collier (5), cette cage portant des agrafes pour recevoir des accessoires à fixer sur l'embase (4).

## Patentansprüche

1. Einstückige Befestigungsvorrichtung zum Befestigen auf dem gezahnten Kopf (3c) eines Bolzens (3), der von einer Befestigungsfläche (4) vorspringt, wobei das Teil einen starren Kragen (5) aufweist, der dazu bestimmt ist, den Fuß des Bolzens nahe der Befestigungsfläche koaxial zu diesem Bolzen zu umgeben, und zumindest einem gezahnten Teil (2), der geeignet ist, mit den Zähnen des Kopfes zusammenzuwirken und der von dem Ende eines elastisch biegsamen Armes (15) getragen ist, der sich schräg zu der Achse (X) des Kragens erstreckt, ausgehend von diesem Kragen und zu dieser Achse hin belastet, dadurch gekennzeichnet, daß jeder gezahnte Teil eine unverformbare Klemmbacke (14) bildet und daß jeder Arm (15) in der Nähe des Kragens eine fiktive Gelenkachse (A) senkrecht zu der Achse des Kragens und in einem Abstand von dieser Achse über dem kleinsten unteren Radius des Kragens (5) verwirklicht.

2. Vorrichtung gemäß Anspruch 1, dadurch gekennzeichnet, daß die Anzahl Arme (15) zum Tragen von Klemmbuchsen (14) gleich zwei ist.

3. Vorrichtung gemäß irgendeinem der Ansprüche 1 und 2, dadurch gekennzeichnet, daß jeder Arm (15) (bei 15a) eine verdünnte Zone zeigt, die ein flexibles Scharnier bildet, und die seine fiktive Gelenkachse (A) realisiert.

4. Vorrichtung gemäß irgendeinem der vorstehenden Ansprüche, dadurch gekennzeichnet, daß sie zwischen jedem Arm (15) und der Klemmbacke (14), den er trägt, eine Versteifungsrippe (18) aufweist, die sich senkrecht zur fiktiven Achse (A) dieses Armes erstreckt, zwischen der Seite der Klemmbacke gegenüber ihrer gezahnten Seite und einer Seite (15b) des Arms, die diesen im rechten Winkel verlängert.

5. Vorrichtung gemäß irgendeinem der vorstehenden Ansprüche, dadurch gekennzeichnet, daß die Ebene (P), die durch eine der fiktiven Achsen (A) und der Oberkante des mittleren Zahns der Klemmbacke (14), die von dem Arm getragen ist, der diese fiktive Achse verwirklicht, verläuft, bezüglich der Achse (X) des Kragens (5) in einem Winkel zwischen 30 und 60° geneigt ist.

6. Vorrichtung gemäß irgendeinem der vorstehenden Ansprüche, dadurch gekennzeichnet, daß in dem Fall, in dem der Kopf (3c) des Bolzens geneigte Gewinde (3a) hat, die gezahnten Abschnitte von jeder Klemmbacke (14) Folgen von Diedern sind, wovon die Oberkanten senkrecht zu der Achse (X) des Kragens (5) sind und die jede einerseits eine Fläche (2a) zeigen, die zum Kragen gewandt ist, und schräg bezüglich der Achse des Kragens geneigt ist, und, andererseits, eine gegenüberliegende Fläche (2b), die im wesentlichen senkrecht zu dieser Achse ist.

7. Vorrichtung gemäß irgendeinem der vorstehenden Ansprüche, dadurch gekennzeichnet, daß jede Klemmbacke (14) zu einer L-Form durch einen Anschlag (19) zum Zentrieren verlängert ist, der sich von einem der beiden Ränder dieser Klemmbacke über einen Abstand von der Achse (X) des Kragens erstreckt, der gleich oder größer als der Radius des gezahnten Kopfes (3c) des Bolzens ist.

8. Vorrichtung gemäß irgendeinem der vorstehenden Ansprüche, dadurch gekennzeichnet, daß jede Klemmbacke (14) und der Arm (15), der diese trägt, im Inneren eines Käfigs angeordnet ist, der starr mit dem Kragen (5) verbunden ist, wobei dieser Käfig Klammern trägt, um Zubehör zum Fixieren auf der Befestigungsfläche (4) aufzunehmen.

## Claims

1. One-piece fixing piece intended to be fixed on the serrated head (3c) of a rod (3) projecting from a base (4), which piece includes a rigid collar (5) intended to surround the foot of the rod close to the base, coaxially with this rod, and at least one serrated portion (2) suitable to cooperate with the serrations on the head and carried by the end of an elastically flexible arm (15) extending obliquely along the axis (x) of the collar, from this collar, and biased towards this axis,
characterised by the fact that each serrated portion forms a non-deformable jaw (14) and by the fact that each arm (15) creates in the proximity of the collar an imaginary axis of articulation (A) perpendicular to the axis of the collar and arranged at a distance from this axis greater than the smallest internal radius of the collar (5).

2. Piece as described in claim 1, characterised by the fact that the number of arms (15) carrying jaws (14) is equal to two.

3. Piece as described in any one of claims 1 and 2, characterised by the fact that each arm (15) has (at 15a) a zone of reduced thickness which constitutes a flexible hinge and which creates its imaginary axis (A) of articulation.

4. Piece as described in any one of the preceding claims, characterised by the fact that it includes between each arm (15) and the jaw (14) which it carries, a stiffening vane (18) extending perpendicularly to the imaginary axis (A) of this arm, between the surface of the jaw opposite to its serrated surface and a surface (15b) of the arm extending it at right angles.

5. Piece as described in any one of the preceding claims, characterised by the fact that the plane (P) passing through one of the imaginary axes (A) and the edge of the median serration of the jaw (14) carried by the arm (15) creating this imaginary axis, is inclined relative to the axis (x) of the collar (5) by an angle of between 30 and 60°.

6. Piece as described in any one of the preceding claims, characterised by the fact that, in the case in which the head (3c) of the rod has slanting threads (3a), the serrated portions (2) of each jaw (14) are successions of dihedrons the vertices of which are perpendicular to the axis (x) of the collar (5) and which each have, on the one hand, a face (2a) turned towards the collar and which is inclined obliquely relative to the axis of the collar, and, on the other hand, an opposite face (2b) which is substantially perpendicular to this axis.

7. Piece as described in any one of the preceding claims, characterised by the fact that each jaw (14) is extended in an L by a centring flap (19) extending from one of the two edges of this jaw to a distance, from the axis (x) of the collar, equal to the largest radius of the serrated head (3c) of the rod.

8. Piece as described in any one of the preceding claims, characterised by the fact that each jaw (14) and the arm (15) which carries it are arranged within a cage rigidly attached to the collar (5), this cage carrying fasteners to receive accessories to be fixed to the base (4).
